# EUROPÄISCHE PATENTSCHRIFT

(11) **EP 0 872 456 B1**
(45) Veröffentlichungstag und Bekanntmachung des Hinweises auf die Patenterteilung: **23.01.2002**
(21) Anmeldenummer: 98105088.3
(22) Anmeldetag: 20.03.1998
(51) Int. Cl.: C03B 23/03, C03B 23/035, C03B 35/24

(54) **Verfahren zum Biegen der Aussenglasscheibe und der Innenglasscheibe von gebogenen Verbundsicherheitsglasscheiben und Pressbiegeanlage zur Durchführung des Verfahrens**
Method for bending the outer and the inner glass-sheet of bent safety-glass-sheets and press-bending apparatus used therefor
Procédé de bombage de la feuille interne et externe des feuilles de sécurité laminées et appareil de bombage pour appliquer ledit procédé

(30) Priorität: 16.04.1997 DE 19715776; 16.04.1997 DE 19715777
(43) Veröffentlichungstag der Anmeldung: 21.10.1998
(73) Patentinhaber: Pilkington Automotive Deutschland GmbH, 58455 Witten (DE)
(72) Erfinder: Funk, Dieter, Dipl. Ing., 58452 Witten (DE)
(74) Vertreter: Honke, Manfred, Dr.-Ing.

(56) Entgegenhaltungen:
- EP-A- 0 578 542
- EP-A- 0 668 249
- DE-C- 3 407 173
- DE-C- 3 913 571
- DE-C- 4 034 600
- US-A- 5 286 271

## Beschreibung

Die Erfindung betrifft ein Verfahren zum Biegen der Außenglasscheibe und der Innenglasscheibe von mit vorgegebener Krümmungsgeometrie gebogenen Verbundsicherheitsglasscheiben, in denen jeweils eine Außenglasscheibe und eine Innenglasscheibe unter Zwischenschaltung einer Verbundfolie gepaart sind, bei welchem Verfahren das Biegen in einer Preßbiegeanlage erfolgt, die eine Biegestation mit einer Biegepatrize und einer Biegematrize aufweist. Zur Preßbiegeanlage gehören außerdem eine Biegestation und zumindest eine Entladestation, wobei zwischen Biegestation und Entladestation ein Transportshuttle arbeitet, wobei die auf Biegetemperatur erwärmten, zu biegenden Glasscheiben mit Hilfe einer Transferstraße einzeln in die Biegestation eingeführt und in dieser unter Berücksichtigung der Krümmungsgeometrie der Verbundsicherheitsglasscheibe gebogen werden. Die Erfindung betrifft fernerhin eine Preßbiegeanlage, die für das erfindungsgemäße Verfahren besonders geeignet ist. In der fertigen Verbundsicherheitsglasscheibe sind die Außenglasscheibe einerseits und die Innenglasscheibe andererseits gleichsam komplementär angeordnet und entsprechend unterschiedlich gekrümmt. - Es versteht sich, das die fertig gebogenen Glasscheiben der Weiterverarbeitung bis zur fertigen, gebogenen Verbundsicherheitsglasscheibe zugeführt werden. Vorzugsweise handelt es sich um Verbundsicherheitsglasscheiben, die für Kraftfahrzeuge bestimmt sind.

Bei den bekannten Verfahren, von denen die Erfindung ausgeht (EP-A2-0 668 249, US-A-52 86 271), wird für die Herstellung von Verbundsicherheitsglasscheiben mit vorgegebener Krümmungsgeometrie in der Biegestation mit zwei Patrizen in Form von Vakuumflächenformen gearbeitet, deren eine für das Biegen der Außenglasscheiben, deren andere für das Biegen der Innenglasscheiben eingerichtet und eingesetzt sind. Die Vakuumflächenformen besitzen Formflächen, die den beschriebenen unterschiedlichen Krümmungsgeometrien für die Außenglasscheiben bzw. die Innenglasscheiben möglichst genau angepaßt sind. Die Preßbiegeanlagen sind den vorgeschriebenen Maßnahmen angepaßt und verteilen die zu biegenden Glasscheiben entsprechend, nämlich die Außenglasscheiben auf die ihnen zugeordnete Vakuumflächenform, die Innenglasscheiben auf die diesen zugeordnete Vakuumflächenform. Die insoweit bekannten Maßnahmen sind aufwendig. Das stört insbesondere deshalb, weil es sich um die Herstellung von ausgeprägten Produkten einer industriellen Serienfertigung handelt.

Der Erfindung liegt das technische Problem zugrunde, die Herstellung von mit vorgegebener Krümmungsgeometrie gebogenen Verbundsicherheitsglasscheiben zu vereinfachen, ohne daß in bezug auf die Qualität der hergestellten Produkte Beeinträchtigungen in Kauf genommen werden müßten. Der Erfindung liegt fernerhin das technische Problem zugrunde, auch die Preßbiegeanlage für die Herstellung solcher Verbundsicherheitsglasscheiben zu vereinfachen.

Zur Lösung dieses technischen Problems ist Gegenstand der Erfindung ein Verfahren zum Biegen der Außenglasscheibe sowie der Innenglasscheibe von mit vorgegebener Krümmungsgeometrie gebogenen Verbundsicherheitsglasscheiben, in denen jeweils eine Außenglasscheibe und eine Innenglasscheibe unter Zwischenschaltung einer Verbundfolie gepaart sind, bei welchem Verfahren das Biegen in einer Preßbiegeanlage erfolgt, die eine Biegestation mit einer Biegepatrize und einer Biegematrize aufweist, bei welchem Verfahren mit einer einzigen Biegepatrize gearbeitet wird und die Außenglasscheibe sowie die Innenglasscheibe mit der gleichen Biegepatrize gebogen werden, wobei die Biegeformgebung der Glasscheiben mit einer Formfläche der Biegepatrize vorgenommen wird, die zumindest teilweise der durch die Verbundfolie definierten Krümmungsfläche der fertigen Verbundsicherheitsglasscheibe angepaßt ist.

Im einzelnen kann im Rahmen der Erfindung auf verschiedene Weise verfahren werden. Insbesondere kann mit einer Biegepatrize gearbeitet werden, die als Vakuumflächenform ausgebildet ist. Auch in bezug auf die Gestaltung der Biegematrize bestehen mehrere Möglichkeiten. Es empfiehlt sich, bei der Biegeformgebung der Glasscheiben mit einer Biegematrize in Form einer Rahmenbiegeform zu arbeiten. Bewährt hat es sich, die Biegeformgebung der Glasscheiben mit einer Formfläche der Biegepatrize vorzunehmen, die im Bereich des Zentrums der Glasscheiben mit der durch die Verbundfolie definierten Krümmungsfläche übereinstimmt sowie zum Rand hin stärker gekrümmt ist. Nach bevorzugter Ausführungsform der Erfindung wird die Biegeformgebung der Glasscheiben mit einer Formfläche der Vakuumflächenform vorgenommen, die mit der durch die Verbundfolie definierten Fläche in der fertigen Verbundsicherheitsglasscheibe unter Berücksichtigung der Fertigungstoleranzen übereinstimmt.

Es versteht sich, daß im Rahmen der Erfindung die zu biegenden Glasscheiben von der Biegepatrize aufgenommen werden müssen. Das kann mit Hilfe von aerostatischen und aerodynamischen Kräften und/oder mit mechanischen Hilfsmitteln bewirkt werden.

Die Erfindung geht von der bisher in bezug auf die Biegeformgebung der Glasscheiben im Zuge der Herstellung von gebogenen Verbundsicherheitsglasscheiben nicht beachteten Tatsache aus, daß in der fertigen Verbundsicherheitsglasscheibe die Außenglasscheibe und die Innenglasscheibe zwar unterschiedlich, jedoch im mathematischen Sinne ähnlich gekrümmt sind. Das gilt für gebogene Verbundsicherheitsglasscheiben selbst dann, wenn diese doppelt gekrümmt sind oder doppelt gekrümmte Bereiche aufweisen und insoweit komplex gebogen sind. Die Erfindung beruht auf der Erkenntnis, daß eine im Sinne der obigen Ausführungen gebogene Verbundsicherheitsglasscheibe, die in qualitätsmäßiger Hinsicht, insbesondere auch in optischer Hinsicht, allen Anforderungen genügt, aus einer gebogenen Außenglasscheibe und einer gebogenen Innenglasscheibe hergestellt werden kann, die bis auf Toleranzen identisch gleich gebogen sind, wenn im übrigen nach Maßgabe der Lehre der Erfindung gearbeitet wird. Entspricht, wie es die Erfindung lehrt, die Formfläche der Patrize zumindest teilweise der Krümmungsfläche der Verbundfolie, so entstehen beim Zusammenfügen der Außenglasscheibe und der Innenglasscheibe unter Zwischenschaltung der Verbundfolie zur Verbundsicherheitsglasscheibe in den Randbereichen auf Krümmungsdifferenzen von Außenglasscheibe und Innenglasscheibe beruhende "Klemmeffekte", welche den Verbund in diesem Randbereich positiv beeinflussen. Vakuumflächenformen mit den zugeordneten Bauteilen sind an sich bekannt (EP-A2-0 668 249, US-A-52 86 271).

Im einzelnen bestehen im Rahmen der Erfindung mehrere Möglichkeiten der weiteren Ausbildung des erfindungsgemäßen Verfahrens. Wenn, wie im allgemeinen üblich, die Preßbiegeanlage einerseits für die gebogenen Außenglasscheiben und andererseits für die gebogenen Innenglasscheiben besondere Entladestationen und Transportshuttles aufweist, lehrt die Erfindung, daß die gebogenen Außenglasscheiben mit einem Transportschlitten zur Entladestation verbracht werden, dessen Aufnahmefläche der Krümmungsgeometrie der Außenglasscheibe in der fertigen Verbundglasscheibe entspricht, und bei der die gebogene Innenglasscheibe mit einem Transportshuttle zur Entladestation verbracht wird, dessen Aufnahmefläche der Krümmungsgeometrie der Innenglasscheibe in der fertigen Verbundglasscheibe entspricht. - Aufnahmefläche bedeutet, daß die gebogene Außenglasscheibe bzw. die gebogene Innenglasscheibe, die mit dem Transportshuttle transportiert wird, an der Aufnahmefläche anliegt. Da in diesem Zustand die gebogenen Glasscheiben noch die Temperatur aufweisen, mit der sie die Biegestation verlassen, kann hierbei gleichsam ein korrigierendes Nachrichten erfolgen. Wie bereits erwähnt, werden die fertig gebogenen Glasscheiben der Weiterverarbeitung zur Verbundsicherheitsglasscheibe zugeführt. Dabei wird man im allgemeinen die gebogenen Glasscheiben auf ihrem Wege zwischen Biegestation und Entladestation in einer Wärmebehandlungskammer eigenspannungsreduziert behandeln. Entsprechende Maßnahmen sind in der Glastechnik an sich bekannt.

Gegenstand der Erfindung ist auch eine Preßbiegeanlage zum Biegen der Außenglasscheibe und der Innenglasscheibe im Zuge der Herstellung von mit vorgegebener Krümmungsgeometrie gebogenen Verbundsicherheitsglasscheiben, welche Preßbiegeanlage zur Durchführung des vorstehend beschriebenen Verfahrens besonders geeignet ist. Sie weist eine Biegestation, zumindest eine Entladestation und ein Transportshuttle zwischen Biegestation und Entladestation auf. Die Biegestation besitzt eine einzige Biegepatrize mit Biegematrize, welche sowohl für das Biegen der Außenglasscheibe als auch für das Biegen der Innenglasscheibe eingerichtet sind, wobei die Biegepatrize eine Formfläche aufweist, die zumindest teilweise der durch die Verbundfolie definierten Fläche der fertigen Verbundsicherheitsglasscheibe angepaßt oder mit dieser identisch ist.

Der Erfindung liegt das technische Problem zugrunde, die Transportshuttle einer Preßbiegeanlage zum Biegen der Außenglasscheibe und der Innenglasscheibe von mit vorgegebener Krümmungsgeometrie gebogenen Verbundsicherheitsglasscheiben so weiter auszubilden, daß störende Verformungen der gebogenen Glasscheiben beim Shuttletransport nicht mehr auftreten können.

Zur Lösung dieses technischen Problems lehrt die Erfindung, ausgehend von den eingangs beschriebenen Maßnahmen, daß die Transportshuttles als Flächenshuttle ausgeführt sind, die eine Aufnahmefläche für die gebogene Außenglasscheibe bzw. die gebogene Innenglasscheibe aufweisen, welche der Krümmungsgeometrie der entsprechenden Glasscheibe in der Verbundsicherheitsglasscheibe angepaßt ist. Insoweit geht die Erfindung von der Erkenntnis aus, daß es im Rahmen einer industriellen Serienfertigung von Verbundsicherheitsglasscheiben in einer Preßbiegeanlage wegen der ungewöhnlich großen Losgrößen der identisch herzustellenden Verbundsicherheitsglasscheiben kaum einen zusätzlichen Aufwand bedeutet, mit Flächenshuttles des beanspruchten Aufbaus und der beschriebenen Funktion zu arbeiten. Der Einsatz solcher Transportshuttles im Rahmen der erfindungsgemäßen Preßbiegeanlage vermeidet nicht nur störende schwerkraftbedingte Verformungen, sondern bewirkt weitere Vorteile. Diese resultieren aus den abkühlungsbedingten Eigenspannungsentwicklungen in Form von Druckspannungen. Tatsächlich bildet der Druckspannungsbereich in der fertigen Verbundsicherheitsglasscheibe nach Einbau in ein Kraftfahrzeug die Außenoberfläche. In dieser werden die Spannungsverhältnisse von der Kraftfahrzeugindustrie begrüßt, weil sie beispielsweise die Beschädigung durch Steinschlag oder Kratzer verringern. Eine Störung der Oberfläche der Außenglasscheibe bzw. der Innenglasscheibe beim Kontakt mit dem Flächenshuttle kann durch entsprechende thermische Behandlung der Glasfläche oder Abdeckung mit Glas- oder Metallfasertüchern vermieden werden.

Bei der erfindungsgemäßen Preßbiegeanlage läßt sich die Eigenspannungsentwicklung steuern. Dazu lehrt die Erfindung, daß die Transportshuttles einen Shuttlekasten aufweisen, der von einer Deckplatte abgedeckt ist, welcher die Aufnahmefläche für die transportierende Außenglasscheibe bzw. Innenglasscheibe aufweist. Die Shuttlekästen werden nach bevorzugter Ausführungsform der Erfindung von einem Wärmeträger oder von einem Kühlmittel durchströmt, wobei die Temperaturen und die Mengenströme des Kühlmittels steuerbar oder regelbar sind und damit auch die Druckspannungsentwicklung gesteuert werden kann. Es besteht aber auch die Möglichkeit, die Abdeckplatten mit Saugbohrungen zu versehen sowie die Shuttlekästen an eine Unterdruckquelle anzuschließen, wobei der Unterdruck im Shuttlekasten steuerbar oder regelbar ist. Wird in der beschriebenen Weise mit einem Unterdruck gearbeitet, so werden die zu transportierenden Außenglasscheiben oder Innenglasscheiben durch den Unterdruck festgehalten, gleichzeitig aber auch gekühlt, wobei die Kühlung durch den Unterdruck gesteuert werden kann. Im Rahmen der Erfindung erfüllt die Abdeckplatte wärmeleitende Funktionen. Sie besteht daher vorzugsweise aus einem gutwärmeleitenden Werkstoff, zum Beispiel aus einer Aluminiumlegierung. In verfahrensmäßiger Hinsicht wird dafür Sorge getragen, daß die gebogene Außenglasscheibe bzw. die gebogene Innenglasscheibe von den Transportshuttles von der Biegepatrize abgenommen werden, wobei die gebogene Außenglasscheibe bzw. die gebogene Innenglasscheibe mit ihrer Außenoberfläche an der Aufnahmefläche des zugeordneten Flächenshuttles anliegt und daß im Bereich der Außenoberfläche eine abkühlungsbedingte Eigenspannungsentwicklung in Form von Druckspannungen zugelassen oder durchgeführt wird.

Im folgenden wird die Erfindung anhand einer lediglich ein Ausführungsbeispiel darstellenden Zeichnung ausführlicher erläutert. Es zeigen in schematischer Darstellung:
- Fig. 1: eine Draufsicht auf eine Preßbiegeanlage, die für das erfindungsgemäße Verfahren geeignet ist, ausschnittsweise,
- Fig. 2: eine Ansicht des Gegenstandes der Fig. 1 aus Richtung der Transferstraße für die zu biegenden Glasscheiben,
- Fig. 3: eine Draufsicht auf eine Verbundsicherheitsglasscheibe,
- Fig. 4: einen Schnitt in Richtung AA durch den Gegenstand der Fig. 3,
- Fig. 5: in schematischer Darstellung einen Ausschnitt aus einer erfindungsgemäßen Preßbiegeanlage nach Fig. 2 mit einem Transportshuttle,
- Fig. 6: in gegenüber der Fig. 5 vergrößertem Maßstab den Transportshuttle aus dem Gegenstand der Fig. 5 im Längsschnitt CC durch Fig. 7,
- Fig. 7: den Querschnitt BB durch den Gegenstand der Fig. 6 und
- Fig. 8: eine Draufsicht auf den Gegenstand der Fig. 6.

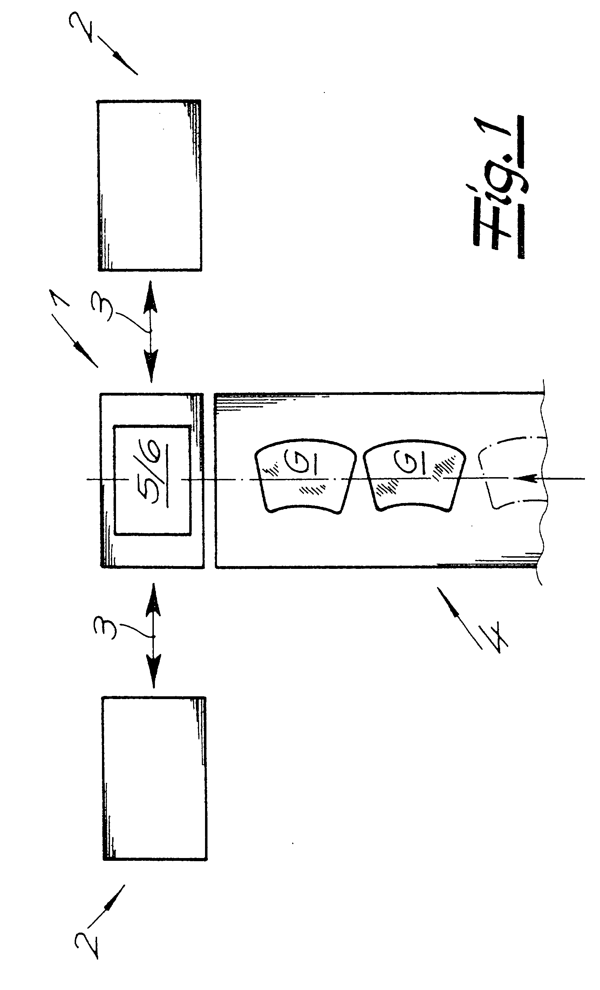

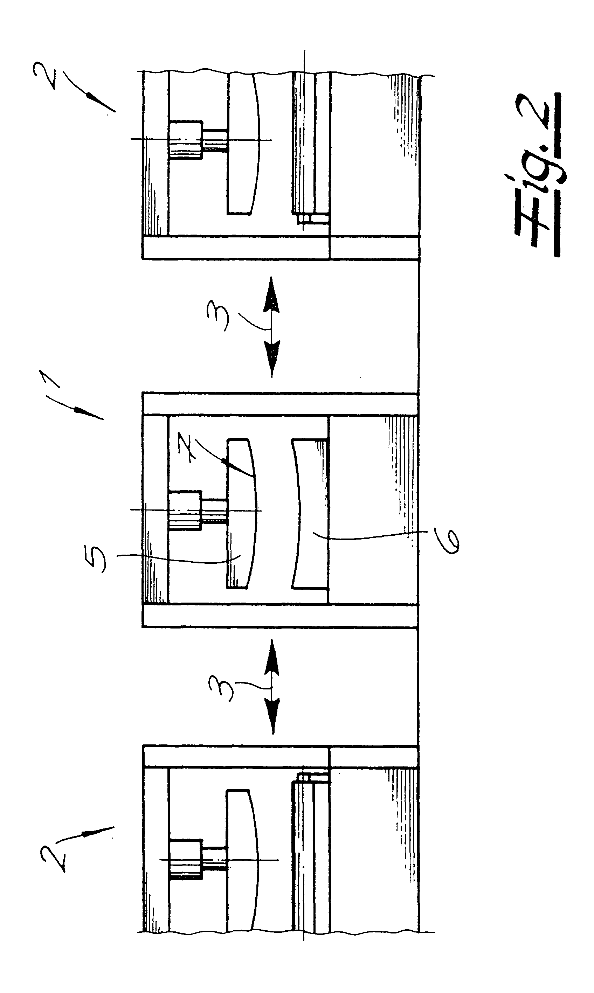

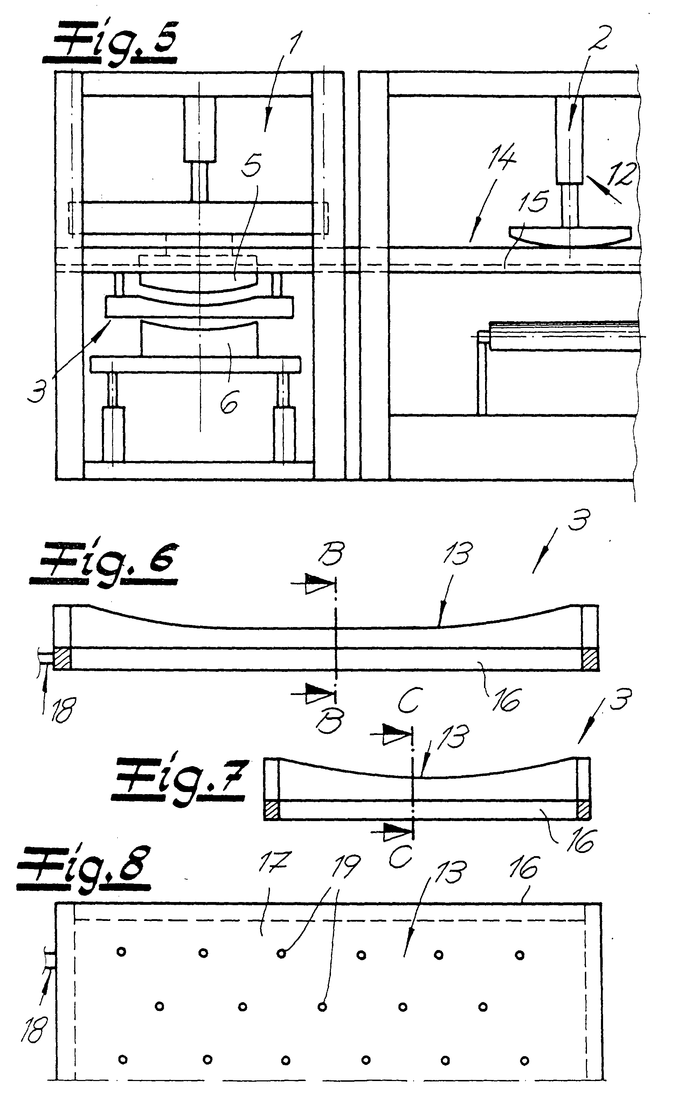

Die in den Figuren dargestellte Anlage gehört zu einer Preßbiegeanlage. Man erkennt eine Biegestation 1 und zwei Entladestationen 2. Zwischen Biegestation 1 und den Entladestationen 2 arbeiten Transportshuttles 3, die durch Doppelpfeile in Fig. 1 und 2 angedeutet und in den Fig. 5 bis 8 näher dargestellt worden sind. Die auf Biegetemperatur erwärmten zu biegenden Glasscheiben G werden mit Hilfe einer Transferstraße 4 einzeln in die Biegestation 1 eingeführt. In der Fig. 1 sind die auf dem Transportmittel der Transferstraße 4 aufliegenden Glasscheiben G angedeutet. In der Biegestation 1 werden die Glasscheiben G unter Berücksichtigung der Krümmungsgeometrie der Verbundsicherheitsglasscheibe gebogen. Im Ausführungsbeispiel, aber ohne Beschränkung, ist die Biegestation mit einer Biegepatrize ausgestattet, die als Vakuumflächenform 5 ausgebildet ist. Die Biegematrize ist im Ausführungsbeispiel eine Rahmenbiegeform 6.

Vergleicht man die Fig. 1 und 2, so erkennt man, daß mit einer einzigen Vakuumflächenform 5 gearbeitet wird. Daraus folgt, daß sowohl die Außenglasscheiben als auch die Innenglasscheiben mit der gleichen Vakuumflächenform 5 gebogen werden. Der Vakuumflächenform 5 ist eine Rahmenbiegeform 6 zugeordnet, die in der Fig. 2 angedeutet ist. Die Biegeformgebung der Glasscheibe G wird mit einer Formfläche 7 der Vakuumflächenform 5 vorgenommen, die der durch die Verbundfolie definierten Fläche in der fertigen Verbundsicherheitsglasscheibe zumindest teilweise angepaßt ist.

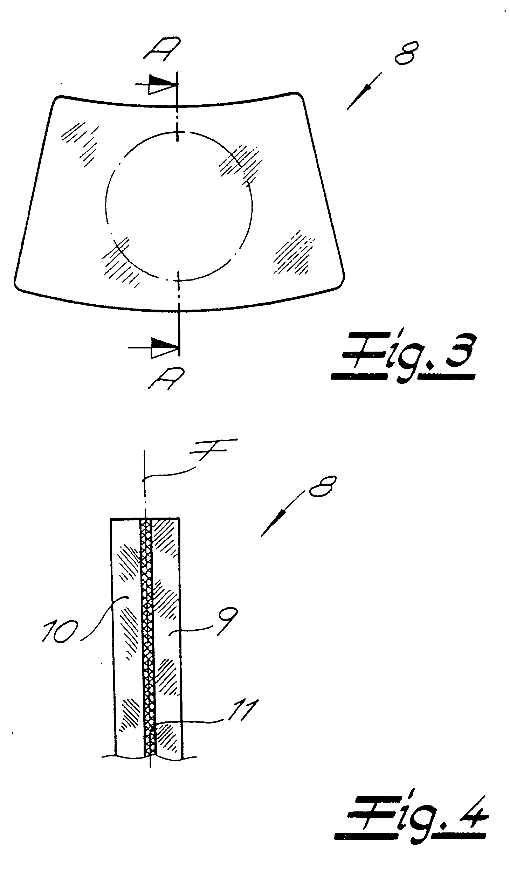

Die Fig. 3 zeigt eine Draufsicht auf eine fertig gebogene Verbundsicherheitsglasscheibe 8. In der Fig. 4 erkennt man den Schnitt AA durch diese Verbundsicherheitsglasscheibe 8. Man erkennt die Außenscheibe 9 und die Innenscheibe 10 sowie die Verbundfolie 11 und die durch die Verbundfolie 11 definierte Fläche F in der fertigen Verbundsicherheitsglasscheibe 8, die durch eine strichpunktierte Linie angedeutet wird. Die Verbundsicherheitsglasscheibe 8 kann auch doppelt und komplex gekrümmt sein, was in der Zeichnung nicht dargestellt wurde. Im Ausführungsbeispiel ist die Formfläche 7 der Vakuumflächenform 5 der Fläche der Verbundfolie 11 der fertigen Verbundsicherheitsglasscheibe 8 nach Maßgabe der Lehre der Erfindung angepaßt. In Fig. 3 wurde durch einen strichpunktierten Kreis der zentrale Bereich der Verbundfolie 11 angedeutet, in dem nach einer Ausführungsform der Erfindung die Formfläche 7 der Vakuumflächenform 5 mit der Krümmungsfläche der Verbundfolie 11 übereinstimmt.

-Die Figuren zeigen eine Preßbiegeanlage, die einerseits für die gebogenen Außenglasscheiben 9 und andererseits für die gebogenen Innenglasscheiben 10 besondere Entladestationen 2 und Transportshuttles 3 aufweist. Die gebogenen Außenglasscheiben 9 werden mit einem Transportshuttle 3 zur Entladestation 2 verbracht, dessen Aufnahmefläche der Krümmungsgeometrie der Außenglasscheibe 9 in der fertigen Verbundsicherheitsglasscheibe 8 entspricht. Entsprechend besitzt der Transportshuttle 3 für die Innenglasscheibe 10 eine Aufnahmefläche, die der Krümmungsgeometrie der Innenglasscheibe 10 in der fertigen Verbundsicherheitsglasscheibe 8 entspricht.

Man erkennt in Fig. 5 im einzelnen rechts neben der Biegestation 1 eine Außenscheiben-Entladestation 2. Entsprechend ist eine Innenscheiben-Entladestation nach links angeschlossen, jedoch nicht gezeichnet. Die Entladestationen 2 arbeiten mit jeweils einem Transportshuttle 3 zwischen Biegestation 1 und den Entladestationen. Die Transportshuttles 3 nehmen die gebogene Außenglasscheibe 9 bzw. die gebogene Innenglasscheibe 10 in der Biegestation 1 auf. Sie werden in der Entladestation 2 an eine Abnahmeeinrichtung 12 abgegeben, die die abgenommene Außenglasscheibe 9 bzw. Innenglasscheibe 10 einem zum Beispiel als Rollgang ausgeführten Förderer übergibt, der, wie beschrieben, zur Weiterverarbeitung führt. Diese Maßnahmen wurden nicht gezeichnet.

In den Fig. 6 und 7 erkennt man, daß der Transportshuttle 3 als Flächenshuttle ausgeführt ist, der eine Aufnahmefläche 13 für die gebogene Außenglasscheibe 9 bzw. die gebogene Innenglasscheibe 10 aufweist, welche der Krümmungsgeometrie der entsprechenden Glasscheibe in der Verbundsicherheitsglasscheibe 8 angepaßt ist. Die Transportshuttles 3 nehmen die gebogene Außenglasscheibe 9 bzw. die gebogene Innenglasscheibe 10 von der Biegepatrize 5 ab. Vorzugsweise wird diese Glasscheibe von der Biegepatrize 5 auf die Aufnahmefläche 13 abgelegt. Die gebogene Außenglasscheibe 9 bzw. die gebogene Innenglasscheibe 10 liegt mit ihrer Außenoberfläche an der Aufnahmefläche 13 des zugeordneten Flächenshuttles 3 an. Das bewirkt im Bereich der Außenoberfläche eine abkühlungsbedingte Eigenspannungsentwicklung in Form von Druckspannungen, die zugelassen oder gesteuert durchgeführt wird. Es versteht sich, daß die Transportshuttles 3 an entsprechende Transporteinrichtungen 14 mit Transportschienen 15 und dergleichen angeschlossen sind und daß ein entsprechender Antrieb vorgesehen ist.

Die Fig. 6 und 7 machen deutlich, daß die Transportshuttles 3 einen Shuttlekasten 16 aufweisen, der von einer Abdeckplatte 17 abgedeckt ist, welche die Aufnahmefläche 13 aufweist. Die Shuttlekästen 16 sind von einem Kühlmittel durchströmt, wobei die Temperatur und die Mengenströme des Kühlmittels steuerbar oder regelbar sind. Man erkennt in der Fig. 6 die entsprechenden Rohrstutzen 18.

Die Fig. 8 zeigt, daß die Abdeckplatte 17 Saugbohrungen 19 aufweisen kann. Weist die Abdeckplatte 17 Saugbohrungen 19 auf, so ist der Shuttlekasten 16 an eine Unterdruckquelle angeschlossen und ist der Unterdruck in dem Shuttlekasten 16 steuerbar oder regelbar, wodurch sich sowohl die Druckspannungsentwicklung steuern läßt als auch eine sichere Fixierung der zu transportierenden gebogenen Glasscheibe bei Anpassung an die vorgegebene Krümmungsgeometrie erreicht wird.

Die beschriebene Anlage ist ein Ausschnitt aus einer Preßbiegeanlage zur Herstellung von gebogenen Verbundsicherheitsglasscheiben 8. Eine solche Anlage besitzt weitere nicht dargestellte Bauteile, nämlich die sog. Glasscheibenauflegestation, einen Vorwärmofen, die beschriebene Biegestation 1, im allgemeinen auch eine Pufferstation, in der eine Wärmebehandlung zum Abbau der Spannungen in den gebogenen Außenglasscheiben 9 bzw. Innenglasscheiben 10 stattfindet, wobei zur Wärmebehandlung auch eine Kühlung gehören kann. Die Entladestationen 2, die schon erwähnt worden sind, können als Nachbiegestation ausgebildet sein, was nicht dargestellt wurde. Angeschlossen an die dargestellten Anlagenteile ist der sog. Entnahme- und Kühlbereich. Es versteht sich, daß zwischen den einzelnen Stationen bzw. Bereichen die üblichen Fördermittel angeordnet sind.

## Patentansprüche

1. Verfahren zum Biegen der Außenglasscheibe sowie der Innenglasscheibe von mit vorgegebener Krümmungsgeometrie gebogenen Verbundsicherheitsglasscheiben, in denen jeweils eine Außenglasscheibe und eine Innenglasscheibe unter Zwischenschaltung einer Verbundfolie gepaart sind, bei welchem Verfahren das Biegen in einer Preßbiegeanlage erfolgt, die eine Biegestation mit einer Biegepatrize und einer Biegematrize aufweist, bei welchem Verfahren mit einer einzigen Biegepatrize gearbeitet wird und die Außenglasscheibe sowie die Innenglasscheibe mit der gleichen Biegepatrize gebogen werden, wobei die Biegeformgebung der Glasscheiben mit einer Formfläche der Biegepatrize vorgenommen wird, die zumindest teilweise der durch die Verbundfolie definierten Krümmungsfläche der fertigen Verbundsicherheitsglasscheibe angepaßt ist.

2. Verfahren nach Anspruch 1, wobei mit einer Biegepatrize gearbeitet wird, die als Vakuumflächenform ausgebildet ist.

3. Verfahren nach einem der Ansprüche 1 oder 2, wobei bei der Biegeformgebung der Glasscheiben mit einer Biegematrize in Form einer Rahmenbiegeform gearbeitet wird.

4. Verfahren nach einem der Ansprüche 1 bis 3, wobei die Biegeformgebung der Glasscheiben mit einer Formfläche der Biegematrize vorgenommen wird, die im Bereich des Zentrums der Glasscheiben mit der durch die Verbundfolie definierten Krümmungsfläche übereinstimmt sowie zum Rand hin stärker gekrümmt ist.

5. Verfahren nach einem der Ansprüche 1 oder 2, wobei die Biegeformgebung der Glasscheiben mit einer Formfläche der Biegepatrize vorgenommen wird, die mit der durch die Verbundfolie definierten Fläche in der fertigen Verbundsicherheitsglasscheibe unter Berücksichtigung der Fertigungstoleranzen übereinstimmt.

6. Verfahren nach Anspruch 1, wobei die Preßbiegeanlage eine Biegestation und zumindest eine Entladestation aufweist, wobei zwischen Biegestation und Entladestation ein Transportshuttle arbeitet, in der Ausführungsform bei der die Preßbiegeanlage einerseits für die gebogenen Außenglasscheiben und andererseits für die gebogenen Innenglasscheiben besondere Entladestationen und Transportshuttles aufweist, wobei die gebogenen Außenglasscheiben mit einem Transportshuttle zur Entladestation verbracht werden, dessen Aufnahmefläche der Krümmungsgeometrie der Außenglasscheibe in der fertigen Verbundglasscheibe entspricht, und die gebogenen Innenglasscheiben mit einem Transportshuttle zur Entladestation verbracht werden, dessen Aufnahmefläche der Krümmungsgeometrie der Innenglasscheibe in der fertigen Verbundglasscheibe entspricht.

7. Verfahren nach einem der Ansprüche 1 bis 6, wobei die gebogenen Glasscheiben zwischen Biegestation und Entladestation in einer Wärmebehandlungskammer eigenspannungsreduzierend behandelt werden.

8. Verfahren nach einem der Ansprüche 1 bis 7, wobei die gebogene Außenglasscheibe bzw. die gebogene Innenglasscheibe mit ihrer Außenoberfläche an der Aufnahmefläche des zugeordneten des Flächenshuttle ausgeführten Transporschuttles anliegt **dadurch gekennzeichnet, daß** im Bereich der Außenoberfläche eine abkühlungsbedingte Eigenspannungsentwicklung in Form von Druckspannungen zugelassen oder durchgeführt wird.

9. Preßbiegeanlage zum Biegen der Außenglasscheibe (9) und/oder Innenglasscheibe (10) im Zuge der Herstellung von mit vorgegebener Krümmungsgeometrie gebogenen Verbundsicherheitsglasscheiben (8), welche Preßbiegeanlage zur Durchführung des Verfahrens nach einem der Ansprüche 1 bis 7 geeignet ist, - mit Biegestation (1), zumindest einer Entladestation (2) und Transportshuttle (3) zwischen Biegestation (1) und Entladestation (2), wobei die Biegestation (1) eine einzige Biegepatrize (5) mit zugeordneter Biegematrize (6) aufweist, und wobei die Biegepatrize (5) eine Formfläche aufweist, die zumindest teilweise der durch die Verbundfolie (11) definierten Krümmungsfläche in der fertigen Verbundsicherheitsglasscheibe (8) angepaßt ist, so daß sie sowohl für das Biegen der Außenglasscheibe (9) als auch für das Biegen der Innenglasscheibe (10) einsetzbar ist.

10. Preßbiegeanlage nach Anspruch 9, wobei die Biegepatrize (5) als Vakuumflächenform sowie die Biegematrize (6) als Rahmenbiegeform ausgeführt sind.

11. Preßbiegeanlage nach einem der Ansprüche 9 oder 10, **dadurch gekennzeichnet, daß** die Transportshuttles (3) als Flächenshuttle ausgeführt sind, die eine Aufnahmefläche (13) für die Außenfläche der gebogenen Außenglasscheibe (9) bzw. gebogenen Innenglasscheibe (10) aufweisen, welche der Krümmungsgeometrie der entsprechenden Glasscheibe in der Verbundsicherheitsglasscheibe (8) angepaßt ist.

12. Preßbiegeanlage nach einem der Ansprüche 9 bis 11, **dadurch gekennzeichnet, daß** die Transportshuttles (3)einen Shuttlekasten (16) aufweisen, der von einer Abdeckplatte (17) abgedeckt ist, welche die Aufnahmefläche (13) aufweist.

13. Preßbiegeanlage nach Anspruch 12, **dadurch gekennzeichnet, daß** die Shuttlekästen (16) von einem Kühlmittel durchströmt sind und daß die Temperatur und die Mengenströme des Kühlmittels steuerbar oder regelbar sind.

14. Preßbiegeanlage nach Anspruch 12, **dadurch gekennzeichnet, daß** die Abdeckplatten (17) mit Saugbohrungen (19) versehen sowie die Shuttlekästen (16) an eine Unterdruckquelle angeschlossen sind und daß der Unterdruck in den Shuttlekästen (16) steuerbar oder regelbar ist.

15. Preßbiegeanlage nach einem der Ansprüche 9 bis 14, **dadurch gekennzeichnet, daß** die Abdeckplatten (17) aus einem gutwärmeleitenden Werkstoff, zum Beispiel aus einer Aluminiumlegierung, bestehen.

## Claims

1. A method for bending the outer glass pane and the inner glass pane of laminated safety glass panes that are bent with a predetermined curvature geometry and in which an outer glass pane and an inner glass pane are respectively mated by using an intermediate foil arranged between the respective glass panes, wherein said bending method is carried out in a bending press that contains a bending station with a male bending mold and a female bending mold, wherein said method utilizes only one male bending mold such that the outer glass pane and the inner glass pane are bent with the same male bending mold, and wherein the bending of the glass panes is carried out with a molding surface of the male bending mold which is at least partially adapted to the surface curvature of the finished laminated safety glass pane that is defined by the intermediate foil.

2. A method according to claim 1, wherein a male bending mold is utilized which is realized in the form of a vacuum surface mold.

3. A method according to claim 1 or 2, wherein the bending of the glass panes is realized with a female bending mold in the form of a frame bending mold.

4. A method according to one of claims 1-3, wherein the bending of the glass panes is realized with a molding surface of the female bending mold that corresponds to the surface curvature defined by the intermediate foil in the region of the center of the glass panes and is curved more intensely toward the edge.

5. A method according to claim 1 or 2, wherein the bending of the glass panes is realized with a molding surface of the female bending mold that corresponds to the surface in the finished laminated safety glass pane that is defined by the intermediate foil, namely under consideration of manufacturing tolerances.

6. A method according to claim 1, wherein the bending press contains a bending station and at least one unloading station, wherein a transport shuttle operates between the bending station and the unloading station, wherein the bending press contains special unloading stations and transport shuttles for the bent outer glass panes on one hand and for the bent inner glass panes on the other hand, wherein the bent outer glass panes are transported to the unloading station by a transport shuttle, the support surface of which corresponds to the curvature geometry of the outer glass pane in the finished laminated glass pane, and wherein the bent inner glass panes are transported to the unloading station by a transport shuttle, the support surface of which corresponds to the curvature geometry of the inner glass pane in the finished laminated glass pane.

7. A method according to one of claims 1-6, wherein the bent glass panes are treated in a heat treatment chamber between the bending station and the unloading station in order to reduce their internal tension.

8. A method according to one of claims 1-7, wherein the outer sides of the bent outer glass pane and the bent inner glass pane respectively adjoin the assigned transport shuttle that is realized in the form of a flat shuttle, **characterized by** the fact that the development of an internal tension in the form of a compressive strain caused by cooling is permitted or realized in the region of the outer surface.

9. A bending press for bending the outer glass pane (9) and/or the inner glass pane (10) during the manufacture of laminated safety glass panes (8) that are bent with a predetermined curvature geometry, wherein said bending press is suitable for carrying out the method according to one of claims 1-7 and contains a bending station (1), at least one unloading station (2) and a transport shuttle (3) that moves between the bending station (1) and the unloading station (2), wherein the bending station (1) contains only one male bending mold (5) with an assigned female bending mold (6), and wherein the male bending mold (5) has a molding surface that is at least partially adapted to the surface curvature in the finished laminated safety glass pane (8) that is defined by the intermediate foil (11) such that it can be used for bending the outer glass pane (9) and for bending the inner glass pane (10).

10. A bending press according to claim 9, wherein the male bending mold (5) is realized in the form of a vacuum surface mold and the female bending mold (6) is realized in the form of a frame bending mold.

11. A bending press according to claim 9 or 10, **characterized by** the fact that the transport shuttles (3) are realized in the form of flat shuttles that respectively contain a support surface (13) for the outer surface of the bent outer glass pane (9) or the bent inner glass pane (10) which is adapted to the curvature geometry of the corresponding glass pane in the laminated safety glass pane (8).

12. A bending press according to one of claims 9-11, **characterized by** the fact that the transport shuttles (3) contain a shuttle box (16), wherein said shuttle box is covered by a cover plate (17) that contains the support surface (13).

13. A bending press according to claim 12, **characterized by** the fact that a refrigerant flows through the shuttle boxes (16), and by the fact that the temperature and the volume flows of the refrigerant can be controlled or regulated.

14. A bending press according to claim 12, **characterized by** the fact that the cover plates (17) are provided with suction bores (19), by the fact that the shuttle boxes (16) are connected to a negative pressure source, and by the fact that the negative pressure in the shuttle boxes (16) can be controlled or regulated.

15. A bending press according to one of claims 9-14, **characterized by** the fact that the cover plates (17) consist of a material with superior thermal conductivity, for example, an aluminum alloy.

## Revendications

1. Procédé de bombage de la vitre extérieure ainsi que de la vitre intérieure de pare-brises feuilletés de sécurité avec une géométrie de courbure prédéfinie, dans lesquels sont respectivement jumelées une vitre extérieure et une vitre intérieure, par l'intermédiaire d'une feuille de jonction, procédé par lequel le bombage est réalisé dans une installation de bombage par emboutissage, qui présente une station de bombage avec une matrice négative de bombage et une matrice positive de bombage, procédé par lequel on travaille avec une seule matrice négative de bombage et où la vitre extérieure aussi bien que la vitre intérieure sont bombées avec la même matrice négative de bombage, la courbure des vitres étant réalisée avec une surface de moulage de la matrice négative, qui est adaptée au moins partiellement à la surface de courbure définie par la feuille de jonction du pare-brise feuilleté de sécurité fini.

2. Procédé selon la revendication 1, dans lequel on travaille avec une matrice négative de bombage se présentant comme un moule en surface sous vide.

3. Procédé selon une des revendications 1 ou 2, dans lequel on travaille, lors de la courbure des vitres, avec une matrice positive de bombage se présentant comme un moule de bombage à cadre.

4. Procédé selon une des revendications 1 à 3, la courbure des vitres étant réalisée avec une surface de moulage de la matrice positive de bombage, qui correspond, dans la zone centrale des vitres, à la surface de courbure définie par la feuille de jonction et qui est également plus fortement courbée en direction du bord.

5. Procédé selon une des revendications 1 ou 2, la courbure des vitres étant réalisée par une surface de moulage de la matrice négative de bombage, qui correspond à la surface définie par la feuille de jonction dans le pare-brise feuilleté de sécurité fini en respectant les tolérances de fabrication.

6. Procédé selon la revendication 1, l'installation de bombage par emboutissage présentant une station de bombage et au moins une station de déchargement, une navette de transport fonctionnant entre la station de bombage et la station de déchargement, dans un modèle de réalisation pour lequel l'installation de bombage par emboutissage présente, d'une part pour les vitres extérieures courbées et d'autre part pour les vitres intérieures courbées, des stations de déchargement et des navettes de transport particulières, les vitres extérieures courbées étant emportées par une navette de transport jusqu'à la station de déchargement, dont la surface de réception correspond à la géométrie de courbure de la vitre extérieure dans le pare-brise feuilleté fini, et les vitres intérieures courbées étant emportées par une navette de transport jusqu'à la station de déchargement, dont la surface de réception correspond à la géométrie de courbure de la vitre intérieure du pare-brise feuilleté fini.

7. Procédé selon une des revendications 1 à 6, les vitres courbées étant traitées, entre la station de bombage et la station de déchargement, dans une chambre de traitement thermique pour réduire leur tension propre.

8. Procédé selon une des revendications 1 à 7, la vitre extérieure courbée ou la vitre intérieure courbée reposant par sa surface extérieure sur la surface de réception de la navette de transport associée en tant que navette en surface, **caractérisé en ce que**, dans la zone de la surface extérieure, un développement de tension propre dû au refroidissement, sous forme de tensions de pression, est admissible ou réalisé.

9. Installation de bombage par emboutissage pour le bombage de la vitre extérieure (9) et/ou vitre intérieure (10) en vue de la fabrication de pare-brises feuilletés de sécurité (8) bombés avec une géométrie de courbure prédéfinie, cette installation de bombage par emboutissage étant adaptée pour la mise en oeuvre du procédé selon une des revendications 1 à 7 - avec une station de bombage (1), au moins une station de déchargement (2) et une navette de transport (3) entre la station de bombage (1) et la station de déchargement (2), la station de bombage (1) présentant une seule matrice négative de bombage (5) à laquelle est associée une matrice positive de bombage (6), et la matrice négative de bombage (5) présentant une surface de moulage qui est adaptée au moins partiellement à la surface de courbure définie par la feuille de jonction (11) dans le pare-brise feuilleté de sécurité fini (8), de telle sorte qu'elle est utilisable aussi bien pour le bombage de la vitre extérieure (9) que pour le bombage de la vitre intérieure (10).

10. Installation de bombage par emboutissage selon la revendication 9, la matrice négative de bombage (5) étant conçue comme un moule en surface sous vide et la matrice positive de bombage (6) comme un moule de bombage à cadre.

11. Installation de bombage par emboutissage selon une des revendications 9 ou 10, **caractérisée en ce que** les navettes de transport (3) se présentent comme des navettes en surface, qui présentent une surface de réception (13) pour la surface extérieure de la vitre extérieure courbée (9) ou de la vitre intérieure courbée (10), qui est adaptée à la géométrie de courbure de la vitre correspondante dans le pare-brise feuilleté de sécurité (8).

12. Installation de bombage selon une des revendications 9 à 11, **caractérisée en ce que** les navettes de transport (3) présentent une caisse de navette (16), qui est couverte d'une plaque de recouvrement (17), qui présente la surface de réception (13).

13. Installation de bombage selon la revendication 12, **caractérisée en ce que** les caisses de navette (16) sont arrosées d'un liquide de refroidissement et que la température et les flux quantitatifs du liquide de refroidissement peuvent être commandés ou régulés.

14. Installation de bombage selon la revendication 12, **caractérisée en ce que** les plaques de recouvrement (17) sont équipées de trous d'aspiration (19) et que les caisses de navette (16) sont reliées à une source de basse pression et que la basse pression dans les caisses de navette (16) peut être commandée ou régulée.

15. Installation de bombage selon une des revendications 9 à 14, **caractérisée en ce que** les plaques de recouvrement (17) sont fabriquées à partir d'un matériau bon conducteur thermique, par exemple un alliage d'aluminium.
